# EUROPÄISCHE PATENTSCHRIFT

(11) **EP 4 074 630 B1**
(45) Veröffentlichungstag und Bekanntmachung des Hinweises auf die Patenterteilung: **06.03.2024**
(21) Anmeldenummer: 21168936.9
(22) Anmeldetag: 16.04.2021
(51) Int. Cl.: B65G 17/20, B65G 19/02

(54) **TRANSFERSCHIENENPROFIL UND ANORDNUNG MIT EINEM TRANSPORTELEMENT**
TRANSFER RAIL PROFILE AND ASSEMBLY WITH A TRANSPORT ELEMENT
PROFILÉ DE RAIL DE TRANSFERT ET AGENCEMENT DOTÉ D'UN ÉLÉMENT DE TRANSPORT

(43) Veröffentlichungstag der Anmeldung: 19.10.2022
(73) Patentinhaber: BEUMER Group GmbH & Co. KG, 59269 Beckum (DE)
(72) Erfinder: NEUGEBAUER, Jürgen, 8102 Semriach (AT)
(74) Vertreter: Angerhausen, Christoph

(56) Entgegenhaltungen:
- EP-A1- 0 430 780
- EP-A1- 2 752 378
- DE-A1- 4 219 977
- DE-U1- 29 516 558

## Beschreibung

Die vorliegende Erfindung betrifft ein Transferschienenprofil für ein Fördersystem, und eine Anordnung mit einem Transportelement. Das Fördersystem kann ein Hängeförderer sein oder aufweisen. Das Transferschienenprofil kann auch für Stauförderer, Transferförderer, Taktförderer oder Gravitationsförderer oder Gravitationsstrecken verwendet werden.

Die Erfindung geht aus von einem Transferschienenprofil für ein Fördersystem mit den Merkmalen des Oberbegriffs des Anspruchs 1. Ein derartiges Transportschienenprofil ist aus der EP 2 752 378 A1 bekannt.

Ein weiteres Transferschienenprofil ist aus der EP 1 690 811 B1 bekannt. In der Regel weisen Fördersysteme weitere Funktionselemente wie z.B. Füllstandsensoren, Vereinzeler, Weichen, Belade- und Entladestationen und dergleichen auf. Diese Funktionselemente müssen häufig angesteuert werden sowie Daten oder Steuerbefehle empfangen oder senden, wobei die Übertragung üblicherweise kabelgebunden erfolgt. Bei Verwendung des bekannten Transferschienenprofils müssen entsprechende Kabel separat verlegt werden, so dass diese unter Umständen ungeschützt und störanfällig sind. Damit kann eine zusätzliche Kabelverkleidung oder die Verwendung von entsprechend aufwendig und teuer konfektionierten Kabeln notwendig sein. Ein Transportschienenprofil, das diese Nachteile überwindet, ist Gegenstand des Anspruchs 1. Eine Anordnung eines Transportschienenprofils und einem Transportelement ist Gegenstand des Anspruchs 13. Vorteilhafte Ausführungsformen sind Gegenstand der abhängigen Ansprüche.

Erfindungsgemäß ist das Transferschienenprofil dadurch gekennzeichnet, dass der Trennsteg einen Vorsprung aufweist, der in die zweite Hohlkammer hineinragt, so dass eine Innenaufnahme in der zweiten Hohlkammer gebildet ist, wobei der Steg eine T-Form aufweist, wobei ein Ende der T-Form einen Teil der Trumführung bildet und der andere Teil der T-Form in die zweite Hohlkammer ragt, so dass die Innenaufnahme durch die T-Form des Stegs begrenzt ist.

Es kann auch vorgesehen sein, dass das Transferschienenprofil mehrere Kabelkanäle aufweist. Das Transferschienenprofil kann Teil einer Transferschiene bilden. Die Transferschiene kann abschnittsweise unterschiedliche Transferschienenprofile und Transferschienenprofilgeometrien aufweisen. Die Transferschiene kann zumindest abschnittsweise in einer Linie oder einer gekrümmten Bahn geführt sein. Das erfindungsgemäße Transferschienenprofil kann einen gekrümmten und/oder nichtgekrümmten Streckenabschnitt der Transferschiene bilden.

Begriffe wie "oberhalb", "unterhalb", "oberes Ende", "unteres Ende", "seitlich" oder dergleichen können auf ein montiertes Transferschienenprofil bzw. ein Transferschienenprofil als Teil einer Transferschiene bzw. eines Fördersystems bezogen sein. Wird das Transferschienenprofil beispielsweise für einen Hängeförderer verwendet, so kann die Richtung der Schwerkraft für die Anordnung der jeweiligen Hohlkammern, Öffnungen und dergleichen wesentlich sein. Beispielsweise kann das Transferschienenprofil derart geformt sein, dass der Halteabschnitt eines in ein montiertes Transferschienenprofil aufgenommenen Transportelements aufgrund seiner Gewichtskraft durch die am unteren Ende angeordnete Öffnung der dritten Hohlkammer nach unten in Richtung der Schwerebeschleunigung ausgerichtet ist. Eine, mehrere oder alle der Hohlkammern können zumindest abschnittsweise nach außen geöffnet sein.

Das Transferschienenprofil kann eine vierte Hohlkammer mit einer Rücktrumführung zur Aufnahme eines Rücktrums aufweisen. Bevorzugt kann die Rücktrumführung parallel zu der Trumführung angeordnet sein. Die Rücktrumführung kann seitlich neben der Trumführung angeordnet sein. Insbesondere wenn der Rücktrum nicht genutzt wird, z.B. in Batch-Puffer-Strecken, kann der Rücktrum durch die vierte Hohlkammer vor Umwelteinflüssen geschützt sein. Zudem kann damit verhindert werden, dass Schmiermittel des Rücktrums in die Umgebung gelangen kann. Es kann aber auch vorgesehen sein, dass die vierte Hohlkammer zu der Umgebung des Transferschienenprofils bzw. nach außen offen bzw. geöffnet ist

Das Transferschienenprofil kann einen Aufsteckabschnitt aufweisen, wobei eine fünfte Hohlkammer zumindest abschnittsweise durch den Aufsteckabschnitt gebildet sein kann. Der Kabelkanal kann bevorzugt in der fünften Hohlkammer angeordnet oder durch diese gebildet sein. Die fünfte Hohlkammer kann zumindest teilweise und/oder abschnittsweise nach außen geöffnet bzw. offen sein. Damit kann der Kabelkanal leicht von außen zugänglich sein, so dass ein Kabel leicht verlegt oder ausgetauscht werden kann. Auf den Aufsteckabschnitt kann eine bevorzugt abnehmbare Bürstenleiste oder Abdichtung aufgesteckt sein. Bei aufgesteckter Bürstenleiste oder Abdichtung kann die fünfte Hohlkammer, z.B. eine Wand, zumindest teilweise durch die Bürstenleiste oder Abdichtung gebildet sein. Es kann vorgesehen sein, dass bei aufgesteckter Bürstenleiste oder Abdichtung der fünfte Hohlraum und/oder der Kabelkanal nach außen geschlossen ist. Damit kann durch die Bürstenleiste bzw. die Abdichtung eine gute Abdichtung des fünften Hohlraums bzw. des Kabelkanals erzielt werden, z.B. gegen Umwelteinflüsse, Staub, Dreck, Verschmutzungen, Flüssigkeit oder dergleichen. Alternativ oder zusätzlich kann ein oder der Kabelkanal in der vierten Hohlkammer angeordnet oder durch diese gebildet sein.

Es kann auch vorgesehen sein, dass der Vorsprung derart geformt ist, dass er sowohl in die zweiten Hohlkammer als auch die dritte Hohlkammer hineinragt. Beispielsweise kann der Vorsprung T-förmig ausgebildet sein. Die Innenaufnahme kann einen oder den Kabelkanal bilden oder aufweisen. Die Innenaufnahme kann aber auch z.B. der Aufnahme von Funktionseinheiten wie Sensoren, Magnetleisten oder dergleichen dienen. Es kann auch vorgesehen sein, dass die Innenaufnahme dem Auffangen von Schmierstoff des Trums dient. In die Innenaufnahme kann eine Kunststoffleiste aufgenommen oder eingeschoben sein, die ein in das Transportschienenprofil aufgenommenes Transportelement und/oder einen Mitnehmer führen oder eine seitliche Querbewegung verhindern kann.

Die Innenaufnahme kann nutförmig mittels des Vorsprungs und des anderen Teils der T-Form ausgebildet sein.

Das Transferschienenprofil kann mindestens einen Montageabschnitt aufweisen. Mindestens einer, mehrere oder alle Montageabschnitte können an einer Außenseite des Transferschienenprofils angeordnet sein. Über den Montageabschnitt können weitere Fördersystemkomponenten oder Funktionselemente an dem Transferschienenprofil montiert werden, beispielsweise Füllstandsensoren, Vereinzeler, Belade- und Entladestationen, Transferschienenträger, oder aber auch weitere Streckenabschnitte des Fördersystems, Weichen oder dergleichen, angeschlossen werden.

Das Transferschienenprofil kann einen ersten Montageabschnitt, einen zweiten Montageabschnitt und einen dritten Montageabschnitt aufweisen, wobei der erste und der zweite Montageabschnitt parallel zueinander angeordnet sein können und der dritte Montageabschnitt senkrecht zu dem ersten und dem zweiten Montageabschnitt angeordnet sein kann.

Das Transferschienenprofil kann einen ersten Montageabschnitt, einen zweiten Montageabschnitt und einen dritten Montageabschnitt aufweisen, wobei der erste Montageabschnitt über dem zweiten Montageabschnitt angeordnet sein kann und der dritte Montageabschnitt senkrecht zu dem ersten und dem zweiten Montageabschnitt angeordnet sein kann.

Der dritte Montageabschnitt kann durch mindestens einen T-förmigen Montagesteg gebildet sein, wobei der T-förmige Montagesteg einen Teil des ersten und/oder zweiten Montageabschnitts bilden kann.

Das Transferschienenprofil kann einen Aufsteckabschnitt aufweisen. Der Aufsteckabschnitt kann sich bevorzugt von einer Oberseite des Transferschienenprofils zumindest abschnittsweise über der vierten Hohlkammer erstrecken, so dass eine fünfte Hohlkammer gebildet sein kann. Die fünfte Hohlkammer kann zu einer Umgebung des Transferschienenprofils bzw. nach außen offen bzw. geöffnet sein. Auf den Aufsteckabschnitt kann eine Bürstenleiste und/oder eine Abdichtung aufgesteckt sein. Bei aufgesteckter Bürstenleiste oder Abdichtung kann eine Wand der fünften Hohlkammer durch die Bürstenleiste oder Abdichtung gebildet sein. Der Kabelkanal kann alternativ oder zusätzlich in der fünften Hohlkammer angeordnet sein. Es kann alternativ oder zusätzlich auch vorgesehen sein, dass der Kabelkanal durch die fünfte Hohlkammer gebildet ist. Damit kann der Kabelkanal leicht von außen zugänglich sein, so dass ein Kabel leicht verlegt oder ausgetauscht werden kann. Zudem kann durch die Bürstenleiste bzw. die Abdichtung eine gute Abdichtung des Kabelkanals erzielt werden. Alternativ oder zusätzlich kann ein oder der Kabelkanal in der vierten Hohlkammer angeordnet oder durch diese gebildet sein.

Das Transferschienenprofil kann mindestens eine Halteaufnahme aufweisen. Die Halteaufnahme kann bevorzugt an einer Unterseite des Transferschienenprofils angeordnet sein. Die Halteaufnahme kann eine Montageaufnahme sein oder als Montageaufnahme dienen.

Die Öffnung kann zumindest teilweise durch die Halteaufnahme begrenzt sein. Die Öffnung kann seitlich durch die Halteaufnahme gebildet sein.

Die dritte Hohlkammer kann an einer Innenseite eine Führungskontur aufweisen, wobei die Führungskontur dazu eingerichtet sein kann, ein in das Transferschienenprofil aufnehmbares Transportelement zumindest abschnittsweise seitlich zu kontaktieren. Die Führungskontur kann abgerundet sein. Durch die Führungskontur kann die Kurvenführung eines in das Transferschienenprofil aufgenommenen Transportelements verbessert sein. Aufgrund des Führungselements kann bei einer Kurvenführung das Transportelement z.B. weniger oder gar nicht verklemmen.

Gemäß einem weiteren Aspekt betrifft die Erfindung eine Anordnung eines Transportelements und eines oben beschriebenen Transferschienenprofils, wobei das Transportelement in dem Transferschienenprofil aufgenommen ist und mindestens eine Rolle, bevorzugt zwei oder vier Rollen, einen Mitnehmerabschnitt und einen Halteabschnitt aufweist, wobei die Rollen von dem Stützabschnitt der dritten Hohlkammer gehalten sind, sich der Mitnehmerabschnitt in die zweiten Hohlkammer erstreckt und sich der Halteabschnitt durch die Öffnung des Transferschienenprofils erstreckt.

Das Transportelement kann dazu eingerichtet sein, zu transportierende Gegenstände entlang des Transportschienenprofils zu transportieren. Der Halteabschnitt kann dazu eine Halterung, z.B. eine Einhängung oder dergleichen, aufweisen. In einer Ausführungsform des Transportelements, z.B. mit einer oder zwei Rollen, ist der Halteabschnitt um eine Achse der Rolle kippbar bzw. schwenkbar.

Ein Abstand zwischen dem Stützabschnitt und dem Trennsteg kann zwischen 5% und 10% größer als ein Durchmesser der Rolle sein. Damit kann der Lauf des Transportelements in dem Transferschienenprofil ruhig und weniger anfällig gegen Störungen, wie z.B. Verkippen des Halteabschnitts um die Achse der Rolle, sein.

Der Halteabschnitt kann in einem Bereich außerhalb des Transferschienenprofils eine Dicke größer als eine Breite der Öffnung aufweisen. Damit kann ein Verschwenken des Halteabschnitts in die dritte Hohlkammer des Transferschienenprofils verhindert werden. Die Öffnung kann in Verbindung mit dem Bereich des Halteabschnitts einen maximalen Kippwinkel des Transferschienenprofils definieren. Der maximale Kippwinkel kann dabei durch den Abstand des Bereichs des Halteabschnitts zu der Öffnung, gemessen bei einem Kippwinkel von 0°, vorgegeben sein. Weist das Transportelement mehr als zwei, z.B. drei oder vier Rollen auf, so kann in mindestens einer Ausführungsform der Halteabschnitts nicht verbreitert sein, falls das Transportelement mehr als eine Achse der Rollen bzw. Rollenachsen aufweist. Ein Verkippen um eine Achse wird dann durch die Rolle der anderen Achse verhindert bzw. entgegengewirkt.

Ein Trum kann in der ersten Hohlkammer und/oder der Trumführung des Transferschienenprofils aufgenommen sein, wobei ein in der zweiten Hohlkammer angeordneter Mitnehmer mit dem Trum verbunden sein kann, so dass das Transportelement durch eine Bewegung des Trums mittels des Mitnehmers und dem Mitnehmerabschnitt bewegbar sein kann, wobei der Mitnehmer und der Mitnehmerabschnitt derart dimensioniert sein können, dass wenn das Transportelement um einen Kippwinkel um eine Achse der Rolle verkippt ist, der Mitnehmer und der Mitnehmerabschnitt außer Eingriff treten. Der Kippwinkel kann bevorzugt größer als 45°, besonders bevorzugt größer als 60° sein.

Die Erfindung ist anhand der nachfolgenden Figuren weiter beschrieben. Es zeigt:
- Fig. 1a:: Eine beispielhafte Ausführungsform eines erfindungsgemäßen Transferschienenprofils in einer Querschnittsansicht;
- Fig. 1b:: Die in Fig. 1a gezeigte Ausführungsform eines erfindungsgemäßen Transferschienenprofils in einer perspektivischen Ansicht;
- Fig. 2a:: Eine weitere beispielhafte Ausführungsform eines erfindungsgemäßen Transferschienenprofils in einer Querschnittsansicht;
- Fig. 2b:: Die in Fig. 2a gezeigte Ausführungsform eines weiteren erfindungsgemäßen Transferschienenprofils in einer perspektivischen Ansicht;
- Fig. 3a:: Eine andere beispielhafte Ausführungsform eines erfindungsgemäßen Transferschienenprofils in einer Querschnittsansicht, mit einem in das Transferschienenprofil aufgenommenen Trum, Mitnehmer und Transportelement;
- Fig. 3b:: Die in Fig. 3a gezeigte beispielhafte Ausführungsform eines erfindungsgemäßen Transferschienenprofils in einer Querschnittsansicht, mit einem in das Transferschienenprofil aufgenommenen Trum, einem anderen Mitnehmer und Transportelement;
- Fig. 4a:: Die in Fig. 2a gezeigte beispielhafte Ausführungsform eines erfindungsgemäßen Transferschienenprofils mit einem in das Transferschienenprofil aufgenommenen Trum, Mitnehmer, Transportelement und Rücktrum;
- Fig. 4b:: Die in Fig. 4a gezeigte beispielhafte Ausführungsform eines erfindungsgemäßen Transferschienenprofils mit einem in das Transferschienenprofil aufgenommenen Trum, einem anderen Mitnehmer, Transportelement und Rücktrum;
- Fig. 5:: Die in Fig. 2a gezeigte beispielhafte Ausführungsform eines erfindungsgemäßen Transferschienenprofils mit einem montierten Funktionselement;
- Fig. 6a:: Eine Ausführungsform eines beispielhaften Transferschienenprofils in einer Seitenansicht, mit einem darin aufgenommenem Trum und Mitnehmer und mit einem in dem Transferschienenprofil aufgenommenem und um eine Achse der Rollen verschwenkten Transportelement; und
- Fig. 6b:: Eine Ausführungsform eines beispielhaften Transferschienenprofils in einer Seitenansicht, mit einem darin aufgenommenem Trum und Mitnehmer und mit einem in dem Transferschienenprofil aufgenommenem anderen Transportelement.

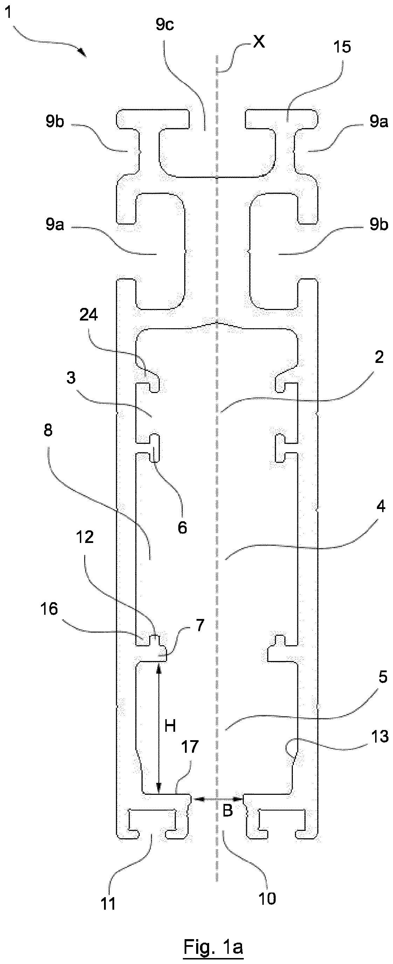

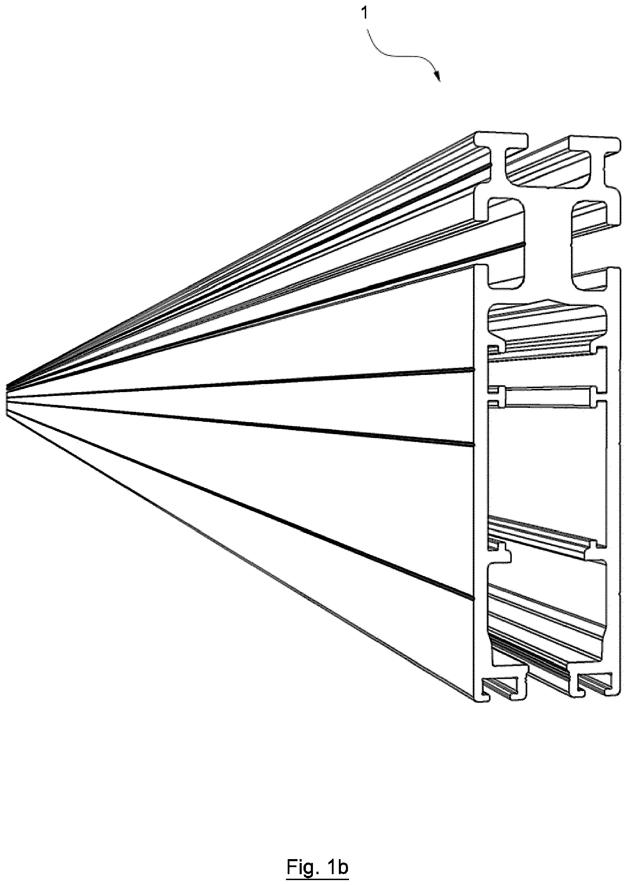

Figur 1a zeigt eine beispielhafte Ausführungsform eines erfindungsgemäßen Transferschienenprofils 1, eine perspektivische Ansicht ist in Figur 1b gezeigt. Das Transferschienenprofil 1 weist eine erste Hohlkammer 2, eine zweite Hohlkammer 4 und eine dritte Hohlkammer 5 auf. Die erste Hohlkammer 2 ist oberhalb der zweiten Hohlkammer 4 angeordnet. Die zweite Hohlkammer 4 ist oberhalb der dritten Hohlkammer 5 angeordnet. Die erste Hohlkammer 2 ist zu der zweiten Hohlkammer 4 geöffnet. Die zweite Hohlkammer 4 ist zu der dritten Hohlkammer 5 geöffnet. Die dritte Hohlkammer 5 ist über eine Öffnung 10 zu der Umgebung des Transferschienenprofils 1 geöffnet. Die Öffnung 10 befindet sich dabei an einem unteren Ende des Transferschienenprofils 1. Die Öffnung 10 kann eine Breite B aufweisen. Die Begriffe "oberhalb", "unteres Ende" und dergleichen können auf ein montiertes Transferschienenprofil 1 bzw. eine montierte Transferschiene bezogen sein. So kann sich z.B. die erste Hohlkammer 2 oberhalb der zweiten Hohlkammer 4 bei einer montierten Transferschiene bzw. Transferschienenprofil befinden. Es kann auch vorgesehen sein, dass die Begriffe "oberhalb", "unterhalb", "oberes Ende", "unteres Ende" und dergleichen eine in den Figuren gezeigte Anordnung definieren.

Zwischen der ersten Hohlkammer 2 und der zweiten Hohlkammer 4 ist ein Steg 6 angeordnet. Der Steg 6 ragt in das Transferschienenprofil 1 hinein. Der Steg 6 trennt die erste Hohlkammer von der zweiten Hohlkammer 4. Der Steg 6 kann gemeinsam mit einem Halteelement 24 eine Trumführung 3 bilden. Die Trumführung 3 kann einen in die erste Hohlkammer 2 aufgenommenen Trum führen. Das Halteelement 24 kann in der ersten Hohlkammer 2 angeordnet sein bzw. in diese hineinragen. Die Trumführung 3 ist in der ersten Hohlkammer 2 angeordnet.

Bevorzugt ist die Trumführung 3 durch zwei sich gegenüberliegende Stege 6 und zwei sich gegenüberliegende Halteelement 24 gebildet, wie in Figur 1a gezeigt. Der Steg 6 ist T-förmig, wobei ein Ende einen Teil der Trumführung 3 bildet und das andere Ende sich nach unten in die zweite Hohlkammer 4 erstreckt.

Zwischen der zweiten Hohlkammer 4 und der dritten Hohlkammer 5 ist ein Trennsteg 7 angeordnet. Der Trennsteg 7 erstreckt sich in das Innere des Transferschienenprofils 1. Der Trennsteg 7 weist einen Vorsprung 12 auf. Der Vorsprung 12 erstreckt sich nach oben in das Innere der zweiten Hohlkammer 4. Der Vorsprung 12 bildet eine Innenaufnahme 8. Die Innenaufnahme 8 kann beispielsweise durch eine Innenseite, z.B. eine seitliche Innenwand, der zweiten Hohlkammer 4 und dem Vorsprung 12 gebildet sein. Die Innenaufnahme 8 kann ein Kabelkanal 16 sein, aufweisen oder bilden. Ein Ende des T-förmigen Stegs 6 erstreckt sich in die zweite Hohlkammer 4, dass die Innenaufnahme 8 durch das Ende des T-förmigen Steg 6, einer Innenseite der zweiten Hohlkammer 4 und dem Vorsprung 12 gebildet sein kann. Die Innenaufnahme 8 kann z.B. der Aufnahme von Sensoren zur Überwachung und/oder Detektieren von z.B. in dem Transferschienenprofil 1 aufgenommenen Mitnehmern, Trum und/oder Transportelement, und/oder zur Aufnahme von Magnetstreifen oder sonstigen Elementen dienen. Es kann auch vorgesehen sein, dass die Innenaufnahme 8 zum Auffangen von Schmiermittel oder dergleichen dienen kann, so dass z.B. weniger oder kein Schmiermittel während des Betriebs des Fördersystems aus der Öffnung 10 des Transferschienenprofils 1 austritt. Alternativ oder zusätzlich kann ein Vorsprung 12 des Trennstegs 7 in die dritte Hohlkammer 5 hineinragen (nicht in den Figuren gezeigt). In diesem Falle kann alternativ oder zusätzlich eine Innenaufnahme 8 durch den Vorsprung 12 in der dritten Hohlkammer 5 gebildet sein.

Das Transferschienenprofil 1 kann mindestens einen Montageabschnitt 9, 9A, 9B, 9C aufweisen. Es kann vorgesehen sein, dass der Montageabschnitt 9, 9A, 9B, 9C an einem oberen Ende des Transferschienenprofils 1 angeordnet ist. Mindestens einer, mehrere oder alle der Montageabschnitte 9, 9A, 9B, 9C können zu der Umgebung des Transferschienenprofils 1 geöffnet sein. Mittels dem oder der Montageabschnitte können weitere Fördersystemelemente oder Funktionselemente, z.B. externe Sensoren oder eine Verkleidung, mit der Transferschiene bzw. dem Transferschienenprofil 1 verbunden sein oder werden. Es kann auch vorgesehen sein, über den oder die Montageabschnitte mehrere Transferschienenabschnitte miteinander zu verbinden oder eine Transferschiene an Fördersystemelemente wie z.B. Beladestationen, Entladestationen, Weichen, Vereinzeler, einem weiteren Transferschienenabschnitt, oder dergleichen anzuschließen. Es kann vorgesehen sein, dass ein erster Montageabschnitt 9A parallel und/oder auf gleicher Höhe zu einem zweiten Montageabschnitt 9B angeordnet ist. Alternativ oder zusätzlich kann vorgesehen sein, dass ein erster Montageabschnitt 9A über einem zweiten Montageabschnitt 9B und/oder umgekehrt angeordnet ist. Ein dritter Montageabschnitt 9C kann über einem ersten Montageabschnitt 9A und/oder einem zweiten Montageabschnitt 9B angeordnet sein. Ein dritter Montageabschnitt 9C kann senkrecht zu einem ersten und/oder einem zweiten Montageabschnitt 9A, 9B angeordnet sein. Der erste und/oder der zweite Montageabschnitt 9A, 9 B kann derart angeordnet sein, dass er seitlich geöffnet ist. Der dritte Montageabschnitt 9C kann derart angeordnet sein, dass er nach oben geöffnet ist. Es kann vorgesehen sein, dass der dritte Montageabschnitt 9C mindestens teilweise durch mindestens einen T-förmigen Montagesteg 15 gebildet sein kann. In diesem Falle kann der T-förmige Montagesteg 15 wie beispielhaft in der Figur 1 gezeigt einen Teil des ersten und/oder zweiten Montageabschnitts 9A, 9 B bilden. Das Transferschienenprofil 1 kann mindestens einen Halteabschnitt 11 aufweisen. Der Halteabschnitt 11 kann an einer Unterseite des Transferschienenprofils 1 angeordnet sein. Der Halteabschnitt 11 kann zu der Umgebung des Transferschienenprofils 1 geöffnet sein. Es kann vorgesehen sein, dass die Öffnung 10 durch mindestens einen Halteabschnitt 11 begrenzt, mindestens teilweise gebildet und/oder geformt ist. Der Halteabschnitt 11 kann ein weiterer Montageabschnitt 9 sein oder als ein solcher dienen. Das Transferschienenprofil 1 kann z.B. mindestens einen, zwei, drei, vier, fünf, sechs oder sieben Montageabschnitte 9 aufweisen.

Die dritte Hohlkammer 5 kann einen Stützabschnitt 17 aufweisen. Ist in das Transferschienenprofil 1 ein Transportelement aufgenommen, so kann das Transportelement durch den Stützabschnitt 17 gehalten werden. Die Öffnung 10 kann sich durch den Stützabschnitt 17 erstrecken. Das Transferschienenprofil 1 kann an einer Innenseite der dritten Hohlkammer 5 eine Führungskontur 13 aufweisen. Die Führungskontur 13 kann eine z.B. eine Führungsschräge sein und/oder geneigt und/oder abgerundet sein. Ist ein Transportelement in dem Transferschienenprofil 1 bzw. der Transferschiene aufgenommen, so kann die Führungskontur 13 das Transportelement seitlich berühren und/oder führen. Soll das Transportelement entlang der Transferschiene bzw. des Stützabschnitts 17 z.B. in einer Kurve geführt werden, so kann durch die Führungskontur 13 ein Verkanten des Transportelements während der Kurvenführung vermieden werden. Insbesondere wenn die Führungskontur abgerundet ist, kann ein solches Verkanten besonders wirksam vermieden werden. Die dritte Hohlkammer 5 kann eine Höhe H zwischen dem Stützabschnitt 17 und dem Trennsteg 7 aufweisen. Ragt ein Vorsprung 12 des Trennstegs 7 in die dritte Hohlkammer 5 hinein (nicht in den Figuren gezeigt), so kann die dritte Hohlkammer 5 alternativ eine Höhe H gemessen von dem Vorsprung 12 zu dem Stützabschnitt 17 aufweisen.

Das Transferschienenprofil 1 kann um eine Symmetrieachse X symmetrisch sein. Das Transferschienenprofil 1 kann aus Aluminium bestehen oder ein solches aufweisen. Das Transferschienenprofil 1 bzw. die Transferschiene kann z.B. mit einem Extrusionsverfahren hergestellt sein oder werden.

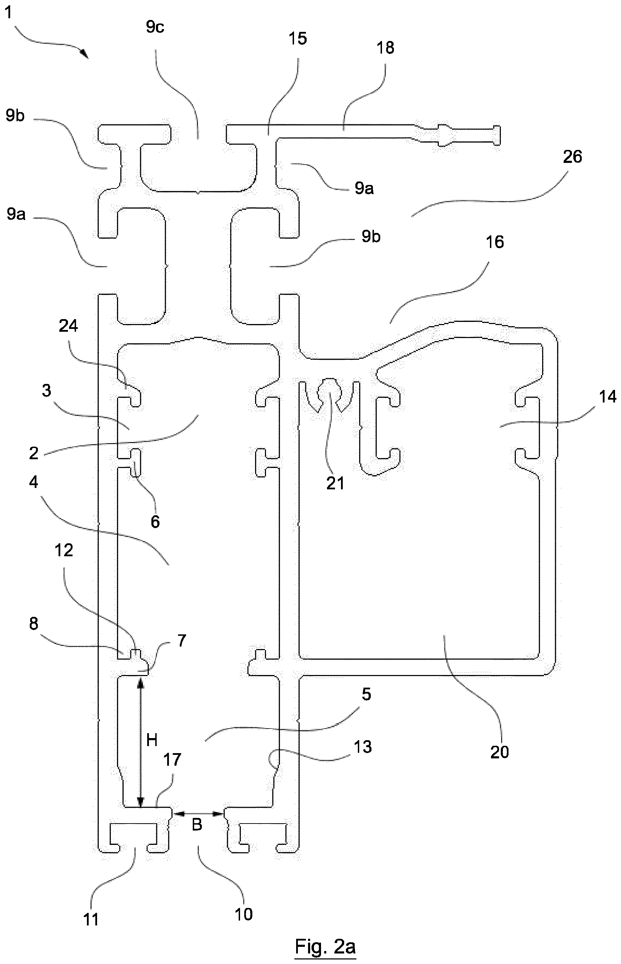

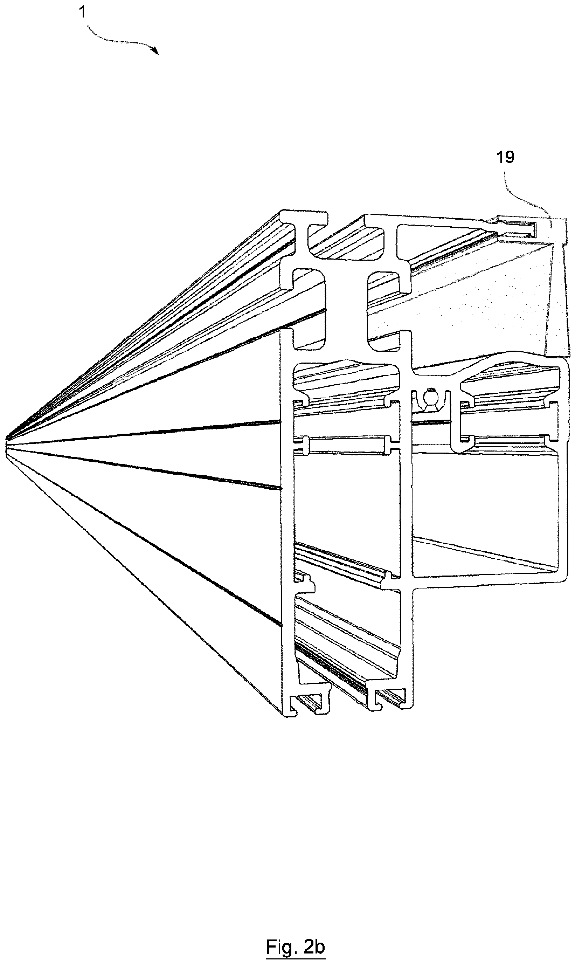

Eine weitere beispielhafte Ausführungsform eines erfindungsgemäßen Transferschienenprofils 1 ist in Figur 2a dargestellt, wobei eine perspektivische Ansicht in Figur 2b gezeigt ist. Die in Figur 2a und 2b gezeigte Ausführungsform kann mehrere oder alle mit Bezug zu Figur 1a und 1b beschriebenen Merkmale aufweisen, so dass auf die obige Beschreibung bzgl. der Figuren 1a und 1b verwiesen wird. Zusätzlich weist die in Figur 2a und 2b gezeigte Ausführungsform des Transferschienenprofils 1 eine vierte Hohlkammer 20 auf. Die vierte Hohlkammer 20 kann seitlich neben der ersten Hohlkammer 3 und/oder der zweiten Hohlkammer 4 angeordnet sein. In der vierten Hohlkammer 20 kann eine Rücktrumführung 14 angeordnet sein. Ist in der vierten Hohlkammer 20 ein Rücktrum angeordnet, so kann dieser durch die Rücktrumführung 14 geführt sein oder werden.

Das Transferschienenprofil 1 kann einen Aufsteckabschnitt 18 aufweisen. Der Aufsteckabschnitt 18 kann seitlich von dem Transferschienenprofil 1 abstehen. Der Aufsteckabschnitt 18 kann zumindest teilweise und/oder abschnittsweise eine fünfte Hohlkammer 26 bilden. Die fünfte Hohlkammer 26 kann zumindest abschnittsweise und/oder teilweise nach außen geöffnet sein. Es kann vorgesehen sein, dass sich der Aufsteckabschnitt 18 wie in Figur 2a gezeigt seitlich zumindest teilweise über die vierte Hohlkammer 20 erstreckt, so dass eine fünfte Hohlkammer 26 gebildet ist. Die fünfte Hohlkammer 26 kann einen Kabelkanal aufweisen oder bilden. Es kann vorgesehen sein, dass der Aufsteckabschnitt 18 von dem T-förmigen Montagesteg absteht. Auf das abstehende Ende des Aufsteckabschnitts 18 kann beispielsweise eine Bürstenleiste 19 oder eine Abdichtung aufgesteckt werden, um die fünfte Hohlkammer 16 gegen die Umgebung abzugrenzen und/oder abzudichten. Die Bürstenleiste 19 bzw. die Abdichtung kann lösbar auf den Aufsteckabschnitt 18 aufgesteckt sein. Bei aufgesteckter Bürstenleiste bzw. Abdichtung kann die Bürstenleiste bzw. Abdichtung zumindest abschnittsweise oder teilweise die fünfte Hohlkammer 26 bilden und/oder nach außen verschließen. Beispielsweise kann die Bürstenleiste 19 und/oder die Abdichtung eine Wand der fünften Hohlkammer 26 bilden. Damit kann der Kabelkanal 16 der fünften Hohlkammer 26 bzw. die fünfte Hohlkammer 26 leicht, einfach und unkompliziert von außen zugänglich sein, so dass ein Kabel leicht, einfach und unkompliziert in der Kabelaufnahme 16 verlegt oder ausgetauscht werden kann. Dabei kann die Kabelaufnahme 16 bzw. der fünfte Hohlraum 26 nach dem Verlegen oder dem Austauschen des Kabels vorteilhaft durch die Bürstenleiste bzw. die Abdichtung gegen Umwelteinflüsse abgedichtet bzw. geschützt sein. Die vierte Hohlkammer 20 kann alternativ oder zusätzlich einen Greifabschnitt 21 oder eine Klemmleiste aufweisen. In den Greifabschnitt 21 oder kann beispielsweise ein Kabel geklemmt werden, so dass der Greifabschnitt 21 als Kabelkanal bzw. Kabelaufnahme dienen kann.

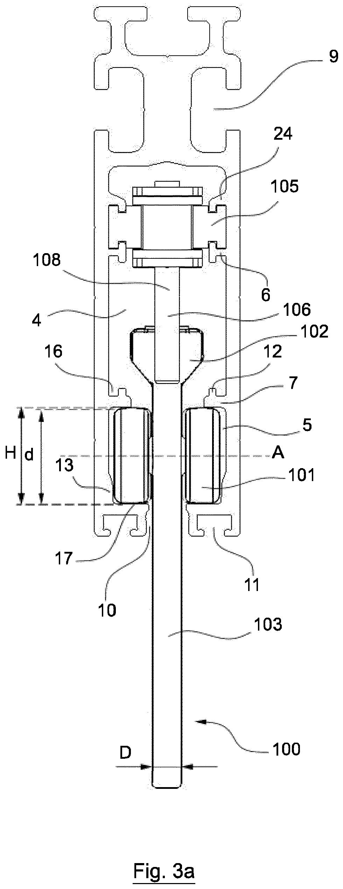

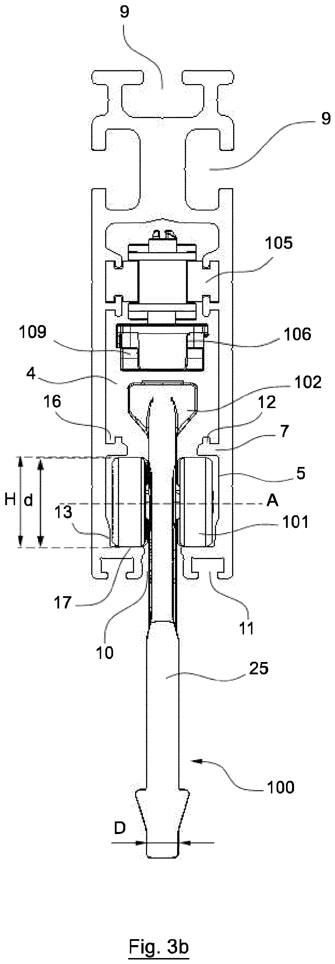

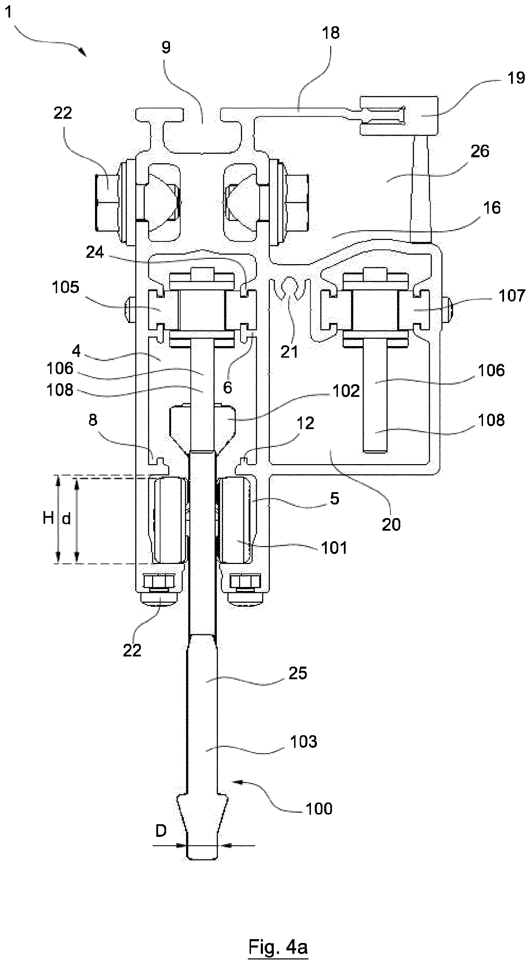

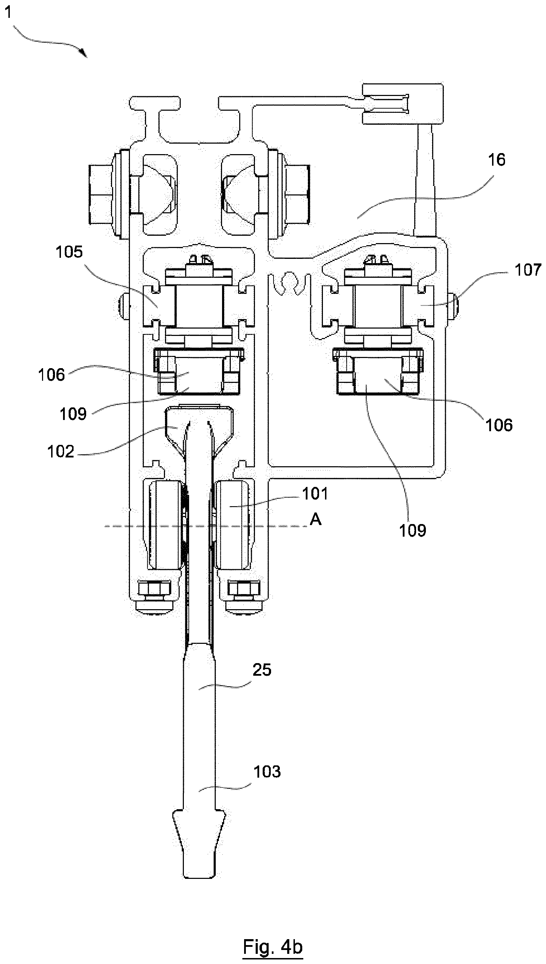

Die Figuren 3a, 3b und 4a, 4b zeigen die jeweiligen erfindungsgemäßen Ausführungsbeispiele eines Transferschienenprofils 1 der Figuren 1a, 1b und 2a, 2b, wobei jeweils ein Transportelement 100 in das Transferschienenprofil 1 bzw. die Transferschiene aufgenommen ist. In den ersten Hohlraum 2 bzw. der Trumführung 3 ist jeweils ein Trum 105 aufgenommen. Mit dem Trum 105 ist mindestens ein Mitnehmer 106 verbunden, wobei der Mitnehmer 106 in der zweiten Hohlkammer 5 angeordnet ist. Das Transportelement 100 weist mindestens eine Rolle 101, einen Mitnehmerabschnitt 102 und einen Halteabschnitt 103 auf. Der Mitnehmerabschnitt 102 ist in der zweiten Hohlkammer 4 angeordnet. Bevorzugt weist das Transportelement 100 zwei oder vier Rollen 101 auf. Je zwei Rollen 101 können auf einer gemeinsamen Achse 9 angeordnet sein. Zwei Rollen 101, bevorzugt je zwei Rollen 101, können parallel zueinander angeordnet auf jeweils gegenüberliegenden Seiten des Transportelements 100 angeordnet sein. Die Rolle 101 oder mindestens eine der Rollen 101, bevorzugt alle Rollen 101, ist in der dritten Hohlkammer 5 angeordnet. Der Halteabschnitt 103 erstreckt sich durch die Öffnung 10 aus dem Transferschienenprofil 1 bzw. der Transferschiene. Das Transportelement 100 bzw. der Halteabschnitt 103 kann beispielsweise dazu eingerichtet sein, Taschen zu halten und zu transportieren.

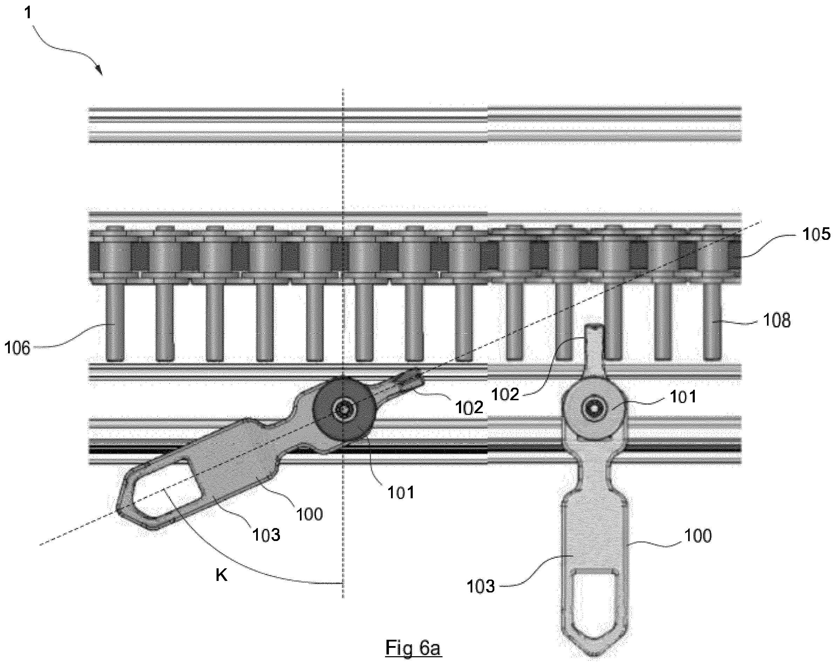

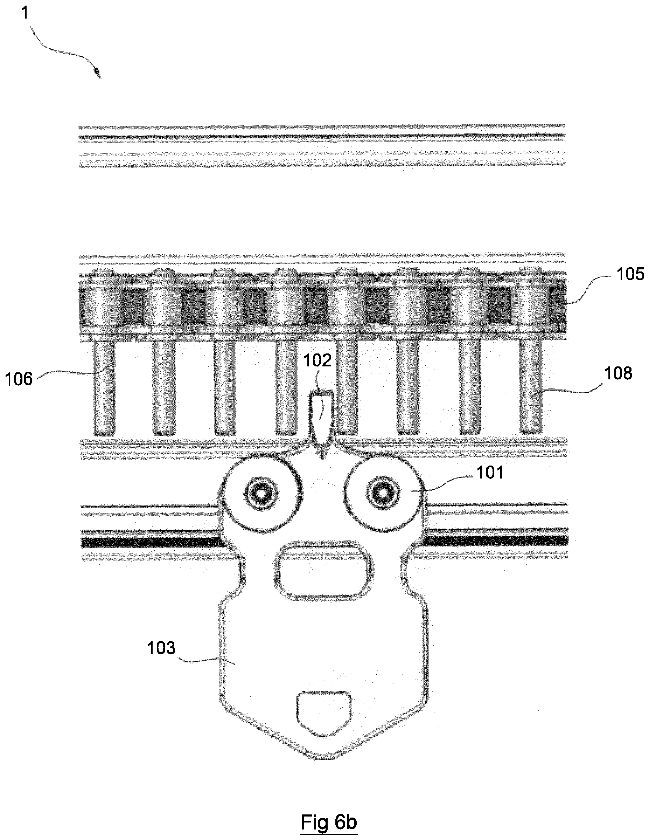

Der Mitnehmer 106 kann einen stabförmigen Abschnitt 108 aufweisen, so dass der stabförmige Abschnitt 108 den Mitnehmerabschnitt 102 kontaktieren kann, vgl. auch Figuren 6a und 6b. Wird der Trum 105 bewegt, so kann der stabförmige Abschnitt 108 gegen den Mitnehmerabschnitt 102 geführt werden, diesen kontaktieren und mitbewegen, d.h. die Bewegung des Trums 105 kann über den Mitnehmer 106 und den Mitnehmerabschnitt 102 auf das Transportelement 100 übertragen werden, vgl. Fig. 3a, 4a, 6a und 6b. Alternativ oder zusätzlich kann der Mitnehmer 106 einen Magneten 109 aufweisen und der Mitnehmerabschnitt 102 ein entsprechendes Koppelstück aufweisen, so dass eine Bewegung des Trums 105 auf das Transportelement 100 mittels einer Magnetkraft übertragen werden kann, vgl. Fig. 3b und 4b.

Die Rolle 101 kann von dem Stützabschnitt 17 gehalten sein oder werden bzw. diesen kontaktieren. Es kann vorgesehen sein, dass die Rolle 101 seitlich durch den Führungsabschnitt 13 geführt ist oder wird bzw. von diesem seitlich kontaktiert wird. Die Höhe H der dritten Hohlkammer 5 kann geringfügig größer als ein Durchmesser d der Rolle 101 sein. Beispielsweise kann die Höhe H zwischen 2% und % größer als der Durchmesser d sein. Ist die Höhe H größer als % des Durchmessers d, so kann die Rolle 101 des Transportelements 100 aufgrund von Vertikalkräften, z.B. beim Beladen oder Entladen, von dem Stützabschnitt 17 abheben und das Transportelement 100 verkanten, verkippen oder verklemmen. Ist die Höhe H aber zu klein gewählt, kann die Rolle 101 beim Führen des Transportelements entlang der Transportschiene blockiert werden.

In einigen Ausführungsformen der Transportelemente 100, insbesondere wenn das Transportelement 100 eine oder zwei Rollen 101 aufweist, kann der Halteabschnitt um die Achse 9 der Rolle 101 drehbar bzw. verschwenkbar sein. Damit kann ggf. der Halteabschnitt 103 durch die Öffnung 10 in die dritte Hohlkammer 5 schwenken, z.B. bei Beschleunigung oder Abbremsung des Transportelements 100. Ein solches Einschwenken kann unerwünscht sein, da z.B. der Halteabschnitt in der dritten Hohlkammer 5 verklemmen kann. Zudem kann bei zu starker Verschwenkung ein von dem Transportelement 100 transportierter Gegenstand von dem Transportelement 100 gelöst werden oder aus diesem herausfallen. Der Halteabschnitt 103 kann deshalb in einem Bereich 25 außerhalb des Transportschienenprofils 1 bzw. der Transportschiene eine Dicke D größer als die Breite B der Öffnung 10 haben und/oder entsprechend aufgedickt sein. Damit kann ein Verkippen des Halteabschnitts 103 in die dritte Hohlkammer 5 vermieden werden. Der Bereich 25 der Aufdickung entlang des Halteabschnitts 103 bzw. der Abstand der Aufdickung 25 von der Öffnung 10 kann entsprechend gewählt sein, um einen maximalen Kippwinkel einzustellen. Damit kann ein Verschwenken des Halteabschnitts 103 in den dritten Hohlraum 5 und/oder ein Herausfallen bzw. Lösen eines transportierten Gegenstands verhindert werden. Eine Verschwenkung eines Transportelements 100 ist beispielsweise in Figur 6a gezeigt.

Weist das Transportelement 100 mehr als zwei Rollen 101 auf, insbesondere zwei oder mehr Achsen 9, so kann vorgesehen sein, dass der Halteabschnitt 103 keine Aufdickung 25 bzw. keinen aufgedickten Bereich 25 aufweist.

Ein Rücktrum 107 kann in der Rücktrumführung 14 aufgenommen sein. Das in den Figuren 2a, 2b, 4a und 4b gezeigte Transferschienenprofil 1 ist besonders für Strecken und/oder Abschnitte des Fördersystems geeignet, bei denen der Rücktrum 107 nicht genutzt wird, z.B. bei Batch-Puffern. Dabei kann der Rücktrum 107 und die mit dem Rücktrum 107 verbundenen Mitnehmer 106 von Umwelteinflüssen geschützt sein. Der Rücktrum 107 kann der Rücktrum des Trums 105 sein. Trum 105 und Rücktrum 107 können in jeweils entgegengesetzte Richtungen bewegt sein oder werden.

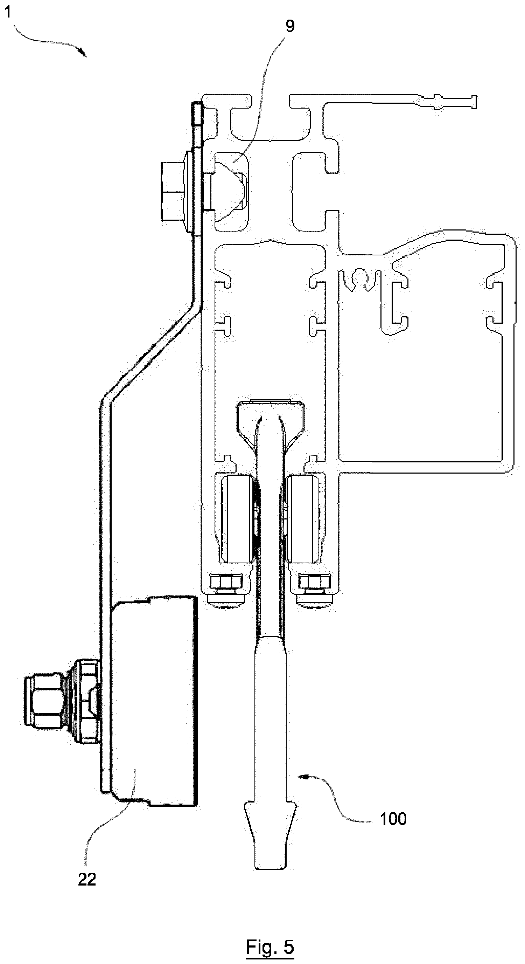

Figur 5 zeigt eine Ausführungsform eines erfindungsgemäßen Transferschienenprofils 1 mit einer Montageöffnung 9. Mittels der Montageöffnung 9 ist ein Funktionselement 22 an dem Transferschienenprofil 1 befestigt. Das Funktionselement 22 der Figur 5 kann beispielsweise ein Füllstandsensor sein, mit dem der Füllstand eines Transportelements 100 gemessen werden kann, oder z.B. ein Sensor zur Identifizierung, Positions- und/oder Geschwindigkeitsbestimmung des Transportelements 100.

Wie in Figur 6a gezeigt kann der Mitnehmer 106, der Mitnehmerabschnitt 102 und ggf. die Höhe der zweiten Hohlkammer 4 derart dimensioniert sein, dass bei einem vorgegebenen Kippwinkel K der Mitnehmerabschnitt 102 und der Mitnehmer 106 außer Eingriff treten. Insbesondere kann eine Länge des stabförmigen Abschnitts 108 und/oder des Mitnehmerabschnitts 102 geeignet gewählt sein. Der Kippwinkel K kann zwischen 45° und 70° gewählt sein. Damit kann ein Verkanten oder Verklemmen des Transportelements 100 in der Transferschiene bzw. dem Transferschienenprofil 1 verringert oder ganz vermieden werden. Durch die Wahl des maximalen Kippwinkels K kann auch ein Herausfallen von mit dem Transportelement 100 bewegten Gütern verhindert werden.

Geeignete Transportelemente 100 sind z.B. in Figur 6a und 6b gezeigt. Das in Figur 6a gezeigte Transportelement weist zwei Rollen 101 auf, das in Figur 6b gezeigte vier Rollen.

Geeignete Transportelemente 100 sind z.B. in Figur 6a und 6b gezeigt. Das in Figur 6a gezeigte Transportelement weist zwei Rollen 101 auf, das in Figur 6b gezeigte vier Rollen.

### Bezugszeichenliste:

- 1: Transferschienenprofil
- 2: erste Hohlkammer
- 3: Trumführung
- 4: zweite Hohlkammer
- 5: dritte Hohlkammer
- 6: Steg
- 7: Trennsteg
- 8: Innenaufnahme
- 9: Montageabschnitt
- 10: Öffnung
- 11: Halteabschnitt
- 12: Vorsprung
- 13: Führungskontur
- 14: Rücktrumführung Montagesteg
- 16: Kabelkanal
- 17: Stützabschnitt
- 18: Aufsteckabschnitt
- 19: Bürstenleiste
- 20: vierte Hohlkammer
- 21: Greifabschnitt
- 22: Funktionselement
- 24: Halteelement
- 25: Aufdickung
- 26: fünfte Hohlkammer
- 100: Transportelement
- 101: Rolle
- 102: Mitnehmerabschnitt
- 103: Halteabschnitt
- 105: Trum
- 106: Mitnehmer
- 107: Rücktrum
- 108: Stababschnitt
- 109: Magnet
- X: Symmetrieachse

## Patentansprüche

1. Transferschienenprofil (1) für ein Fördersystem, wobei das Transferschienenprofil (1) eine erste Hohlkammer (2) zur Aufnahme eines Trums und eine unterhalb der ersten Hohlkammer (2) angeordneten zweiten Hohlkammer (4) zur Aufnahme eines mit dem Trum verbundenen Mitnehmers aufweist, wobei die erste Hohlkammer (2) zu der zweiten Hohlkammer (4) geöffnet ist und zwischen der ersten Hohlkammer (2) und der zweiten Hohlkammer (4) ein Steg (6), der einen Teil einer Trumführung (3) zur Führung des Trums in der ersten Hohlkammer (2) bildet, absteht, wobei das Transferschienenprofil (1) eine unterhalb der zweiten Hohlkammer (4) angeordnete dritte Hohlkammer (5) mit einem Stützabschnitt (17) zur Stützung eines in das Transferschienenprofil aufnehmbaren Transportelements aufweist, wobei die zweite Hohlkammer (4) zu der dritten Hohlkammer (5) geöffnet ist und zwischen zweiter Hohlkammer (4) und dritter Hohlkammer (5) ein Trennsteg (7) absteht, wobei die dritte Hohlkammer (5) durch eine Öffnung (10) zu einer Umgebung des Transferschienenprofils (1) geöffnet ist, wobei das Transferschienenprofil (1) einen Kabelkanal (16) aufweist, **dadurch gekennzeichnet, dass** der Trennsteg (7) einen Vorsprung (12) aufweist, der in die zweite Hohlkammer (4) hineinragt, so dass eine Innenaufnahme (8) in der zweiten Hohlkammer (4) gebildet ist, wobei der Steg (6) eine T-Form aufweist, wobei ein Ende der T-Form einen Teil der Trumführung (3) bildet und der andere Teil der T-Form in die zweite Hohlkammer (2) ragt, so dass die Innenaufnahme (8) durch die T-Form des Stegs (6) begrenzt ist.

2. Transferschienenprofil (1) nach Anspruch 1, das eine vierte Hohlkammer (20) mit einer Rücktrumführung (14) zur Aufnahme eines Rücktrums aufweist, wobei bevorzugt die Rücktrumführung (14) parallel zu der Trumführung (3) angeordnet ist.

3. Transferschienenprofil (1) nach einem der vorangegangenen Ansprüche, das einen Aufsteckabschnitt (18) aufweist, wobei eine fünfte Hohlkammer (26) zumindest abschnittsweise durch den Aufsteckabschnitt (18) gebildet ist, wobei der Kabelkanal (16) bevorzugt in der fünften Hohlkammer (26) angeordnet oder durch diese gebildet ist, wobei bevorzugt der Aufsteckabschnitt (18) sich von einer Oberseite des Transferschienenprofils (1) zumindest abschnittsweise über der vierten Hohlkammer (20) erstreckt.

4. Transferschienenprofil (1) nach einem der vorangegangenen Ansprüche, das mindestens einen Montageabschnitt (9; 9a, 9b, 9c) aufweist.

5. Transferschienenprofil (1) nach Anspruch 4, das einen ersten Montageabschnitt (9a), einen zweiten Montageabschnitt (9b) und einen dritten Montageabschnitt (9c) aufweist, wobei der erste und der zweite Montageabschnitt (9a, 9b) parallel zueinander angeordnet sind und der dritte Montageabschnitt (9c) senkrecht zu dem ersten und dem zweiten Montageabschnitt (9a, 9b) angeordnet ist.

6. Transferschienenprofil (1) nach Anspruch 4 oder 5, das einen ersten Montageabschnitt (9a), einen zweiten Montageabschnitt (9b) und einen dritten Montageabschnitt (9c) aufweist, wobei der erste Montageabschnitt über dem zweiten Montageabschnitt (9a, 9b) angeordnet ist und der dritte Montageabschnitt (9c) senkrecht zu dem ersten und dem zweiten Montageabschnitt (9a, 9b) angeordnet ist.

7. Transferschienenprofil (1) nach einem der Ansprüche 4 bis 6, bei dem der dritte Montageabschnitt (9c) durch mindestens einen T-förmigen Montagesteg (15) gebildet ist, wobei der T-förmige Montagesteg (15) einen Teil des ersten und/oder zweiten Montageabschnitts (9a; 9b) bildet.

8. Transferschienenprofil (1) nach einem der vorangegangenen Ansprüche, das mindestens eine Halteaufnahme (11) aufweist, wobei die Halteaufnahme (11) bevorzugt an einer Unterseite des Transferschienenprofils (1) angeordnet ist.

9. Transferschienenprofil (1) nach Anspruch 8, bei dem die Öffnung (10) zumindest teilweise durch die Halteaufnahme (11) begrenzt ist.

10. Transferschienenprofil (1) nach einem der vorangegangenen Ansprüche, bei dem die dritte Hohlkammer (5) an einer Innenseite eine Führungskontur (13) aufweist, wobei die Führungskontur (13) dazu eingerichtet ist, ein in das Transferschienenprofil (1) aufnehmbares Transportelement (100) zumindest abschnittsweise seitlich zu kontaktieren.

11. Anordnung eines Transportelements (100) und eines Transferschienenprofils (1) nach einem der vorangegangenen Ansprüche, wobei das Transportelement (100) in dem Transferschienenprofil (1) aufgenommen ist und mindestens eine Rolle (101), bevorzugt zwei oder vier Rollen (101), einen Mitnehmerabschnitt (102) und einen Halteabschnitt (103) aufweist, wobei die Rollen (101) von dem Stützabschnitt (17) der dritten Hohlkammer (5) gehalten sind, sich der Mitnehmerabschnitt (102) in die zweiten Hohlkammer (4) erstreckt und sich der Halteabschnitt (103) durch die Öffnung (10) des Transferschienenprofils (1) erstreckt.

12. Anordnung nach Anspruch 11, bei der der Halteabschnitt (103) in einem Bereich (25) außerhalb des Transferschienenprofils (1) eine Dicke (D) größer als eine Breite (B) der Öffnung (10) aufweist.

13. Anordnung nach einem der Ansprüche 11 oder 12, bei der ein Trum (105) in der ersten Hohlkammer (2) und/oder der Trumführung (3) des Transferschienenprofils (1) aufgenommen ist, wobei ein in der zweiten Hohlkammer (4) angeordneter Mitnehmer (106) mit dem Trum (103) verbunden ist, so dass das Transportelement (100) durch eine Bewegung des Trums (103) mittels des Mitnehmers (106) und dem Mitnehmerabschnitt (107) bewegbar ist, wobei der Mitnehmer (106) und der Mitnehmerabschnitt (107) derart dimensioniert sind, dass wenn das Transportelement (100) um einen Kippwinkel (K) um eine Achse (A) der Rolle (101) verkippt ist, der Mitnehmer (106) und der Mitnehmerabschnitt (107) außer Eingriff treten, wobei der Kippwinkel (K) bevorzugt größer als 45°, besonders bevorzugt größer als 60° ist.

## Claims

1. A transfer rail profile (1) for a conveying system, wherein the transfer rail profile (1) has a first hollow chamber (2) for receiving a strand and a second hollow chamber (4), arranged below the first hollow chamber (2), for receiving a driver connected to the strand, wherein the first hollow chamber (2) is open towards the second hollow chamber (4) and a web (6), which forms part of a strand guide (3) for guiding the strand in the first hollow chamber (2), protrudes between the first hollow chamber (2) and the second hollow chamber (4), wherein the transfer rail profile (1) has a third hollow chamber (5), arranged below the second hollow chamber (4), with a supporting section (17) for supporting a transport element which can be received in the transfer rail profile, wherein the second hollow chamber (4) is open towards the third hollow chamber (5) and a separating web (7) protrudes between the second hollow chamber (4) and the third hollow chamber (5), wherein the third hollow chamber (5) is open through an opening (10) to the surroundings of the transfer rail profile (1), wherein the transfer rail profile (1) has a cable channel (16), **characterized in that** the separating web (7) has a projection (12) which protrudes into the second hollow chamber (4), so that an inner receptacle (8) is formed in the second hollow chamber (4), wherein the web (6) has a T-shape, wherein one end of the T-shape forms part of the strand guide (3) and the other part of the T-shape protrudes into the second hollow chamber (2), so that the inner receptacle (8) is delimited by the T-shape of the web (6).

2. The transfer rail profile (1) according to claim 1, which has a fourth hollow chamber (20) with a return strand guide (14) for receiving a return strand, wherein the return strand guide (14) is preferably arranged parallel to the strand guide (3).

3. The transfer rail profile (1) according to one of the preceding claims, which has a plug-on section (18), wherein a fifth hollow chamber (26) is formed at least in sections by the plug-on section (18), wherein the cable channel (16) is preferably arranged in the fifth hollow chamber (26) or is formed by the latter, wherein the plug-on section (18) preferably extends from an upper side of the transfer rail profile (1) at least in sections over the fourth hollow chamber (20).

4. The transfer rail profile (1) according to one of the preceding claims, which has at least one mounting section (9; 9a, 9b, 9c).

5. The transfer rail profile (1) according to claim 4, which has a first mounting section (9a), a second mounting section (9b) and a third mounting section (9c), wherein the first and the second mounting section (9a, 9b) are arranged parallel to one another and the third mounting section (9c) is arranged perpendicular to the first and the second mounting section (9a, 9b).

6. The transfer rail profile (1) according to claim 4 or 5, which has a first mounting section (9a), a second mounting section (9b) and a third mounting section (9c), wherein the first mounting section is arranged over the second mounting section (9a, 9b) and the third mounting section (9c) is arranged perpendicular to the first and the second mounting section (9a, 9b).

7. The transfer rail profile (1) according to one of claims 4 to 6, in which the third mounting section (9c) is formed by at least one T-shaped mounting web (15), wherein the T-shaped mounting web (15) forms a part of the first and/or second mounting section (9a; 9b).

8. The transfer rail profile (1) according to one of the preceding claims, which has at least one holding receptacle (11), wherein the holding receptacle (11) is preferably arranged on an underside of the transfer rail profile (1).

9. The transfer rail profile (1) according to claim 8, in which the opening (10) is delimited at least in part by the holding receptacle (11).

10. The transfer rail profile (1) according to one of the preceding claims, in which the third hollow chamber (5) has a guide contour (13) on an inner side, wherein the guide contour (13) is designed to contact a transport element (100) which can be received in the transfer rail profile (1) at least in sections laterally.

11. An assembly of a transport element (100) and a transfer rail profile (1) according to one of the preceding claims, wherein the transport element (100) is received in the transfer rail profile (1) and has at least one roller (101), preferably two or four rollers (101), a driver section (102) and a holding section (103), wherein the rollers (101) are held by the supporting section (17) of the third hollow chamber (5), the driver section (102) extends into the second hollow chamber (4) and the holding section (103) extends through the opening (10) of the transfer rail profile (1).

12. The assembly according to claim 11, in which the holding section (103) has a thickness (D) greater than a width (B) of the opening (10) in a region (25) outside the transfer rail profile (1).

13. The assembly according to one of claims 11 or 12, in which a strand (105) is received in the first hollow chamber (2) and/or the strand guide (3) of the transfer rail profile (1), wherein a driver (106) arranged in the second hollow chamber (4) is connected to the strand (103), so that the transport element (100) can be moved by a movement of the strand (103) by means of the driver (106) and the driver section (107), wherein the driver (106) and the driver section (107) are dimensioned such that when the transport element (100) is tilted by a tilt angle (K) about an axis (A) of the roller (101), the driver (106) and the driver section (107) disengage, wherein the tilt angle (K) is preferably greater than 45°, particularly preferably greater than 60°.

## Revendications

1. Profilé de rail de transfert (1) pour un système de convoyage, dans lequel le profilé de rail de transfert (1) comprend une première cavité (2) pour le logement d'un tambour et une deuxième cavité (4) disposée en dessous de la première cavité (2), pour le logement d'un entraîneur relié avec le tambour, dans lequel la première cavité (2) est ouverte en direction de la deuxième cavité (4), et entre la première cavité (2) et la deuxième cavité (4), s'étend une nervure (6), qui constitue une partie d'un guidage de tambour (3) pour le guidage du tambour dans la première cavité (2), dans lequel le profilé de rail de transfert (1) comprend une troisième cavité (5) disposée en dessous de la deuxième cavité (4), avec une portion d'appui (17) pour l'appui d'un élément de transport pouvant être logé dans le profilé de rail de transfert, dans lequel la deuxième cavité (4) est ouverte en direction de la troisième cavité (5) et, entre la deuxième cavité (4) et la troisième cavité (5), s'étend une nervure de séparation (7), dans lequel la troisième cavité (5) est ouverte, grâce à une ouverture (10), vers un environnement du profilé de rail de transfert (1), dans lequel le profilé de rail de transfert (1) comprend une goulotte de câble (16), **caractérisé en ce que** la nervure de séparation (7) présente une saillie (12) qui pénètre dans la deuxième cavité (4), de sorte qu'un logement interne (8) est formé dans la deuxième cavité (4), dans lequel la nervure (6) présente une forme de T, dans lequel une extrémité de la forme de T constitue une partie du guidage de tambour (3) et l'autre partie de la forme de T dépasse dans la deuxième cavité (2) de sorte que le logement interne (8) est limité par la forme de T de la nervure (6).

2. Profilé de rail de transfert (1) selon la revendication 1, qui comprend une quatrième cavité (20) avec un guidage de tambour arrière (14) pour le logement d'un tambour arrière, dans lequel, de préférence le guidage de tambour arrière (14) est disposé parallèlement au guidage de tambour (3).

3. Profilé de rail de transfert (1) selon l'une des revendications précédentes, qui comprend une portion d'enfichage (18), dans lequel une cinquième cavité (26) est constituée, au moins à certains endroits, de la portion d'enfichage (18), dans lequel la goulotte de câble (16) est disposée de préférence dans la cinquième cavité (26) ou est constituée de celle-ci, dans lequel, de préférence, la portion d'enfichage (18) s'étend à partir d'un côté supérieur du profilé de rail de transfert (1), au moins à certains endroits au-dessus de la quatrième cavité (20).

4. Profilé de rail de transfert (1) selon l'une des revendications précédentes, qui comprend au moins une portion de montage (9 ; 9a, 9b, 9c).

5. Profilé de rail de transfert (1) selon la revendication 4, qui comprend une première portion de montage (9a), une deuxième portion de montage (9b) et une troisième portion de montage (9c), dans lequel les première et deuxième portions de montage (9a, 9b) sont disposées parallèlement entre elles et la troisième portion de montage (9c) est disposée perpendiculairement aux première et deuxième portions de montage (9a, 9b).

6. Profilé de rail de transfert (1) selon la revendication 4 ou 5, qui comprend une première portion de montage (9a), une deuxième portion de montage (9b) et une troisième portion de montage (9c), dans lequel la première portion de montage est disposée au-dessus de la deuxième portion de montage (9a, 9b) et la troisième portion de montage (9c) est disposée perpendiculairement aux première et deuxième portions de montage (9a, 9b).

7. Profilé de rail de transfert (1) selon l'une des revendications 4 à 6, dans lequel la troisième portion de montage (9c) est constituée d'au moins une nervure de montage en forme de T (15), dans lequel la nervure de montage en forme de T (15) constitue une partie de la première et/ou deuxième portion de montage (9a ; 9b).

8. Profilé de rail de transfert (1) selon l'une des revendications précédentes, qui comprend au moins un logement de maintien (11), dans lequel le logement de maintien (11) est disposé de préférence sur un côté inférieur du profilé de rail de transfert (1).

9. Profilé de rail de transfert (1) selon la revendication 8, dans lequel l'ouverture (10) est limitée au moins partiellement par le logement de maintien (11).

10. Profilé de rail de transfert (1) selon l'une des revendications précédentes, dans lequel la troisième cavité (5) présente, au niveau d'un côté inférieur, un contour de guidage (13), dans lequel le contour de guidage (13) est conçu pour entrer en contact latéralement, au moins à certains endroits, avec un élément de transport (100) pouvant être logé dans le profilé de rail de transfert (1).

11. Disposition d'un élément de transport (100) et d'un profilé de rail de transfert (1) selon l'une des revendications précédentes, dans laquelle l'élément de transport (100) est logé dans le profilé de rail de transfert (1) et au moins un rouleau (101), de préférence deux ou quatre rouleaux (101), comprend une portion d'entraînement (102) et une portion de maintien (103), dans lequel les rouleaux (101) sont maintenus par la portion d'appui (17) de la troisième cavité (5), la portion d'entraînement (102) s'étend dans la deuxième cavité (4) et la portion de maintien (103) s'étend à travers l'ouverture (10) du profilé de rail de transfert (1).

12. Disposition selon la revendication 11, dans laquelle la portion de maintien (103) présente, dans une zone (25) à l'extérieur du profilé de rail de transfert (1), une épaisseur (D) supérieure à une largeur (B) de l'ouverture (10).

13. Disposition selon l'une des revendications 11 ou 12, dans laquelle un tambour (105) est logé dans la première cavité (2) et/ou le guidage de tambour (3) du profilé de rail de transfert (1), dans laquelle un entraîneur (106) disposé dans la deuxième cavité (4) est relié avec le tambour (103), de sorte que l'élément de transport (100) peut être déplacé par un déplacement du tambour (103) au moyen de l'entraîneur (106) et de la portion d'entraînement (107), dans laquelle l'entraîneur (106) et la portion d'entraînement (107) sont dimensionnés de sorte que, lorsque l'élément de transport (100) est basculé d'un angle de basculement (K) autour d'un axe (A) du rouleau (101), l'entraîneur (106) et la portion d'entraînement (107) se déboîtent, dans laquelle l'angle de basculement (K) est de préférence supérieur à 45°, plus particulièrement de préférence supérieur à 60°.
